# EUROPÄISCHE PATENTSCHRIFT

(11) **EP 1 159 152 B1**
(45) Veröffentlichungstag und Bekanntmachung des Hinweises auf die Patenterteilung: **02.11.2005**
(21) Anmeldenummer: 00922510.3
(22) Anmeldetag: 10.03.2000
(51) Int. Cl.: B60N 2/22, B60N 2/427

(54) **SITZ FÜR EINEN INSASSEN EINES KRAFTFAHRZEUGS**
SEAT FOR A PASSENGER OF A MOTOR VEHICLE
SIEGE POUR OCCUPANT DE VEHICULE

(30) Priorität: 11.03.1999 DE 19910666
(43) Veröffentlichungstag der Anmeldung: 05.12.2001
(73) Patentinhaber: Volkswagen Aktiengesellschaft, 38436 Wolfsburg (DE)
(72) Erfinder: WOHLLEBE, Thomas, D-38110 Braunschweig (DE); SINNHUBER, Ruprecht, D-38518 Gifhorn (DE)
(74) Vertreter: Schneider, Henry
(86) Internationale Anmeldenummer: PCT/EP2000/002124
(87) Internationale Veröffentlichungsnummer: WO 2000/053450

(56) Entgegenhaltungen:
- DE-A- 19 738 201
- DE-A- 19 752 247
- DE-A- 19 754 311
- DE-A- 19 757 533
- US-A- 5 772 280
- US-A- 5 795 019
- US-A- 5 884 968

## Beschreibung

Die Erfindung betrifft einen Sitz für einen Insassen eines Kraftfahrzeugs, mit einem Sitzteil, einer Rückenlehne und einer Kopfstütze, bei dem die Rückenlehne einen mit dem Sitzteil verbundenen ersten Lehnenteil und einen die Kopfstütze tragenden, in Bezug zum ersten Lehnenteil verschwenkbaren zweiten Lehnenteil aufweist, und bei dem ein Teil der bei einem Heckaufprall vom Fahrzeuginsassen auf die Rückenlehne ausgeübten Kräfte genutzt wird, um die Kopfstütze näher an den Kopf des Fahrzeuginsassen heranzubewegen.

Bei Auffahrunfällen, bei denen ein Kraftfahrzeug von hinten auf das Heck eines anderen, stehenden oder langsamer fahrenden Kraftfahrzeugs auffährt, werden die Fahrzeuginsassen im vorderen Kraftfahrzeug infolge ihrer Trägheit in Bezug zu ihrem Fahrzeugsitz nach hinten beschleunigt. Weil von den meisten Fahrzeuginsassen die Neigung der Rückenlehne so eingestellt wird, daß ihr Oberkörper und insbesondere ihr Becken während der Fahrt gegen die Rückenlehne des Sitzes angelehnt ist und von dieser abgestützt wird, werden diese gewöhnlich sofort von der Rückenlehne aufgefangen und abgebremst. Demgegenüber ist jedoch in den üblichen Sitzpositionen zwischen der Kopfstütze und dem Kopf des Fahrzeuginsassen zumeist ein mehr oder weniger großer Abstand vorhanden, so daß der Kopf des Fahrzeuginsassen erst mit Verzögerung von der Kopfstütze aufgefangen und abgebremst wird und auch mit verhältnismäßig großer Kraft gegen die Kopfstütze prallt. Dadurch kommt es bei Auffahrunfällen nicht selten zu einer hohen Belastung und Weichteilverletzungen im Halswirbelbereich (Schleudertrauma). Dazu trägt auch bei, daß sich die Rückenlehne bei hohen Aufprallgeschwindigkeiten infolge der vom Fahrzeuginsassen darauf ausgeübten Kräfte verformt und nach hinten biegt, wodurch der Abstand zwischen der Kopfstütze und dem Kopf des Fahrzeuginsassen noch größer wird.

Um bei einem Heckaufprall die Belastungen im Halswirbelbereich eines Fahrzeuginsassen zu verringern, wurde in der DE 296 01 479 U1 bereits ein Fahrzeugsitz der eingangs genannten Art vorgeschlagen, bei dem der zweite Lehnenteil und die Kopfstütze einen zweiarmigen Hebel bilden. Dieser Hebel ist um eine horizontale Schwenkachse im ersten Lehnenteil verschwenkbar gelagert, so daß die Kopfstütze unter Verringerung des Abstands zum Kopf des Fahrzeuginsassen nach vorne geschwenkt wird, wenn bei einem Heckaufprall die durch die träge Masse des Fahrzeuginsassen erzeugten Kräfte im Bereich von dessen Oberkörper und insbesondere im Bereich von dessen Schultern auf den zweiten Lehnenteil einwirken und diesen entgegen der Fahrtrichtung nach hinten drücken. Diese Anordnung weist jedoch besonders drei Nachteile auf. Erstens liegen die Schultern des Fahrzeuginsassen in der normalen Sitzposition häufig nicht gegen die Rückenlehne an, so daß die Kopfstütze ebenfalls erst nach einer gewissen Verzögerung nach vorne verschwenkt wird. Zweitens muß das Verhältnis der Hebelarme zwischen der Schwenkachse und dem Kraftangriffspunkt des Kopfes an der Kopfstütze einerseits bzw. dem Kraftangriffspunkt der Schultern am zweiten Lehnenteil andererseits verhältnismäßig groß sein, um die Kopfstütze ausreichend weit nach vorne zu bewegen. Dieses große Hebelverhältnis macht sich jedoch beim Aufprall des Kopfes auf die Kopfstütze negativ bemerkbar, weil durch den großen Hebelarm des Kopfes die Kopfstütze wieder nach hinten und damit die Schultern des Fahrzeuginsassen vom zweiten Lehnenteil nach vorne gedrückt werden, wodurch ebenfalls starke Belastungen im Halswirbelbereich des Fahrzeuginsassen verursacht werden. Drittens liegt die Schwenkachse nahe am unteren Ende der Kopfstütze, wodurch sich deren Vorderseite beim Verschwenken schräg nach oben neigt und damit der Kopf des Fahrzeuginsassen in unerwünschter Weise nach vorne beugt.

Weiter ist aus der DE 296 09 786 U1 bereits ein Fahrzeugsitz mit einer einteiligen Rückenlehne und einer verschwenkbar daran angebrachten Kopfstütze bekannt, bei dem die bei einem Heckaufprall von einen Fahrzeuginsassen auf die Rückenlehne ausgeübten Kräfte von einem innerhalb der Rückenlehne angeordneten biegsamen Zugelement aufgenommen und auf die Kopfstütze übertragen werden, um diese näher an den Kopf des Fahrzeuginsassen heranzubewegen. Das Zugelement wird dort beim Heckaufprall vom Rücken des Fahrzeuginsassen durchgebogen, wobei eine infolge der Durchbiegung am oberen Ende erzeugte Zugkraft die Kopfstütze in Bezug zur Rückenlehne verschwenkt. Auch bei dieser Anordnung liegt die Schwenkachse in der Nähe des unteren Endes der Kopfstütze, um das Verhältnis der Hebelarme zwischen der Schwenkachse und dem Kraftangriffspunkt des Kopfes einerseits bzw. dem Kraftangriffspunkt des Zugelements andererseits verhältnismäßig groß zu machen. Somit treten auch hier die oben genannten Nachteile auf.

Weiter ist aus der DE 29 52 064 A1 der Anmelderin bereits ein Fahrzeugsitz mit einem mit dem Sitzteil verbundenen unteren Lehnenteil und einen die Kopfstütze tragenden, in Bezug zum unteren Lehnenteil verschwenkbaren oberen Lehnenteil bekannt, bei dem die Neigung des oberen Lehnenteils und der Kopfstütze unverändert bleibt, wenn die Neigung des unteren Lehnenteils durch Drehen eines Verstellrads verändert wird. Bei einem Heckaufprall kommt es hier jedoch nicht zu einer Annäherung der Kopfstütze an den Kopf des Fahrzeuginsassen.

Aus US 5,795,019 A ist ein gattungsbildender Kraftfahrzeugsitz bekannt, bei dem die Rückenlehne einen mit dem Sitzteil verbundenen ersten Lehnenteil und einen die Kopfstütze tragenden, in Bezug zum ersten Lehnenteil verschwenkbaren zweiten Lehnenteil aufweist. Bei einem Heckaufprall von Fahrzeuginsassen auf die Rückenlehne ausgeübte Kräfte werden genutzt, um die Kopfstütze näher an den Kopf des Fahrzeuginsassen heranzubewegen.

Ausgehend hiervon liegt der Erfindung die Aufgabe zugrunde, einen Fahrzeugsitz der eingangs genannten Art dahingehend zu verbessern, dass die Kopfstütze verzögerungsfrei an den Kopf des Fahrzeuginsassen heranbewegt und mit einer verhältnismäßig großen Kraft in dieser Position festgehalten wird.

Diese Aufgabe wird erfindungsgemäß dadurch gelöst, dass beim Heckaufprall mindestens ein Teil der vom Fahrzeuginsassen auf den ersten unteren Lehnenteil ausgeübten Kräfte auf den zweiten oberen Lehnenteil übertragen werden, um diesen zusammen mit der Kopfstütze in Bezug zum unteren Lehnenteil nach vorne zu verschwenken und dadurch die Kopfstütze näher an den Kopf des Fahrzeuginsassen heranzubewegen (wie aus der o.g. US 5,795,019 A bekannt), wobei, erfindungsgemäss vom Fahrzeuginsassen im Bereich seines Beckens auf den unteren Lehnenteil ausgeübte Kräfte übertragen werden. Der Erfindung liegt erstens der Gedanke zugrunde, die vom Fahrzeuginsassen im unteren Teil seines Oberkörpers und insbesondere im Bereich seines Beckens auf den Fahrzeugsitz ausgeübten Kräfte zur Verstellung der Kopfstütze und des oberen Lehnenteils zu nutzen, weil der Oberkörper in den üblichen Sitzpositionen dort stets an der Rückenlehne angelehnt oder abgestützt ist. Damit erfolgt die Kraftaufnahme nahezu verzögerungsfrei, wodurch auch bei geringen Aufprallgeschwindigkeiten der Kopf und die Schultern des Fahrzeuginsassen frühzeitig an der Kopfstütze bzw. am oberen Lehnenteil zu Anlage kommen. Zweitens wird die Kopfstütze wegen der günstigeren Hebelverhältnisse durch den Kopf des Fahrzeuginsassen nicht oder nur in geringem Ausmaß wieder nach hinten gedrückt, und wenn, dann erfolgt dies zusammen mit dem oberen, die Schultern des Fahrzeuginsassen stützenden Lehnenteil, so dass im Bereich der Halswirbel keine zu einem Schleudertrauma führenden Belastungen auftreten können. Drittens ist ein verhältnismäßig kleiner Schwenkwinkel ausreichend, um die Kopfstütze weit nach vorne in die Nähe des Kopfs des Fahrzeuginsassen zu bewegen, wodurch die Kopfstütze frühzeitig zur Anlage gegen den Kopf des Fahrzeuginsassen gelangt. Viertens bleibt der eingestellte Neigungswinkel zwischen dem oberen Lehnenteil und der Kopfstütze unverändert, so daß der Kopf des Fahrzeuginsassen in Bezug zu dessen Schulterpartie nicht nach vorne gedrückt wird. Nicht zuletzt erleichtert es die erfindungsgemäße Merkmalskombination darüber hinaus auch, die Kopfstütze ohne Behinderung durch einen Verstellmechanismus in herkömmlicher Weise höhenverstellbar an der Rückenlehne anzubringen.

Gemäß einer bevorzugten Ausgestaltung der Erfindung umfaßt die Lehne ein Kraftaufnahmeelement und eine Kraftübertragungseinrichtung, wobei das erstere in der unteren Hälfte und vorzugsweise im unteren Drittel des unteren Lehnenteils angeordnet ist, um die vom Fahrzeuginsassen auf diesen Teil der Rückenlehne ausgeübten Kräfte aufzunehmen und sie durch die Kraftübertragungseinrichtung auf das obere Lehnenteil und die Kopfstütze zu übertragen, sie nach vorne zu verschwenken und sie in dieser Schwenklage festzuhalten.

Das Kraftaufnahmeelement besteht zweckmäßigerweise aus einer Beckenstütze, die vom Bezug verdeckt innerhalb des unteren Lehnenteils vom unteren Ende eines Kraftübertragungshebels der Kraftübertragungseinrichtung gehalten wird. Neben dem Kraftübertragungshebel kann die Kraftübertragungseinrichtung zweckmäßig ein weiteres vorzugsweise als Schwenkhebel ausgebildetes Element umfassen, mit dessen Hilfe das Verhältnis zwischen dem Schwenkwinkel des Kraftübertragungshebels und demjenigen des oberen Lehnenteils und der Kopfstütze optimal eingestellt werden kann.

Der zweiarmige Kraftübertragungshebel kann gleichzeitig als Träger für eine Lordosenstütze dienen, die auf diese Weise ebenfalls ein Kraftaufnahmeelement bildet.

Um zu erreichen, daß der bei einem Heckaufprall durch die Trägheitskräfte gegen die Rückenlehne gepreßte Fahrzeuginsasse im Bereich seines Beckens weich abgefedert wird, sieht eine weitere vorteilhafte Ausgestaltung der Erfindung vor, daß das Kraftaufnahme- und/oder Kraftübertragungselement in Richtung der Trägheitskräfte entgegen der Kraft einer Feder beweglich gelagert ist. Diese Feder kann gleichzeitig auch dazu dienen, den oberen Lehnenteil und die Kopfstütze in die Normalstellung zurückzubewegen, nachdem die bei einem Heckaufprall auf das Kraftaufnahmeelement ausgeübte Kraft entlastet wird.

Gemäß einer weiteren bevorzugten Ausgestaltung der Erfindung weist die Rückenlehne im Bereich zwischen dem oberen und dem unteren Lehnenteil einen Drehbeschlag auf, der es gestattet, die Neigung des oberen Lehnenteils in Bezug zum unteren Lehnenteil von Hand zu verstellen. Dadurch kann die Kopfstütze auch dann in einem geringen Abstand hinter dem Kopf des Fahrzeuginsassen gehalten werden, wenn dieser eine verhältnismäßig geringe Lehnenneigung bevorzugt. Zweckmäßig umfaßt der Drehbeschlag mindestens ein drehfest mit dem oberen Lehnenteil verbundenes Beschlagelement, das zum einen mittels eines Verstellrades in Bezug zum unteren Lehnenteil verdrehbar ist und das zum anderen bei einer Schwenkbewegung des Kraftübertragungshebels mit diesem gekoppelt wird. Die Kopplung zwischen dem Kraftübertragungshebel und dem Beschlagelement erfolgt über ein Mitnehmerelement, das in seiner Normalstellung für einen Freilauf sorgt und nur beim Verschwenken des Kraftübertragungshebels mit dem Beschlagelement in Dreheingriff gebracht wird.

Im folgenden wird die Erfindung anhand zweier in der Zeichnung dargestellter Ausführungsbeispiele näher erläutert. Es zeigen:
- Figur 1: eine teilweise geschnittene Seitenansicht eines erfindungsgemäßen Fahrzeugsitzes mit Kopfstütze;
- Figur 2: eine teilweise geschnittene Seitenansicht eines anderen erfindungsgemäßen Fahrzeugsitzes;
- Figur 3: eine teilweise geschnittene Vorderseitenansicht der Rückenlehne des Sitzes aus Fig. 2;
- Figur 4: eine vergrößerte Detailansicht entsprechend dem Kreis IV aus Fig. 3 und
- Figuren 5a bis 5c: vergrößerte Schnittansichten entlang der Schnittlinie V-V aus Fig. 4 in unterschiedlichen Schwenkstellungen des Lehnenkopfs.

Die in der Zeichnung dargestellten Kraftfahrzeugsitze 2 bestehen im wesentlichen aus einem Sitzteil 4, einer zweiteiligen Rückenlehne 6 mit einem Lehnenunterteit 8 und einem um eine horizontale Achse 10 verschwenkbar auf dem Lehnenunterteil 8 gelagerten Lehnenkopf 12, einer nach oben über den Lehnenkopf 12 überstehenden Kopfstütze 14, sowie einem passiven Lehnenkopfverstellmechanismus 16, der bei einem Heckaufprall einen Teil der vom Fahrzeuginsassen (nicht dargestellt) auf das Lehnenunterteil 8 ausgeübten Kräfte aufnimmt und auf den Lehnenkopf 12 überträgt, um diesen zusammen mit der Kopfstütze 14 nach vorne zu schwenken und dadurch die Kopfstütze 14 näher an den Kopf des Fahrzeuginsassen heranzubewegen.

Wie bei üblichen Kraftfahrzeugsitzen kann die Neigung der Rückenlehne 6 mittels eines Verstellrades 18 verändert werden, das seitlich zwischen dem Sitzteil 4 und dem Lehnenunterteil 8 auf einer Schwenkachse 20 des Lehnenunterteils 8 angebracht ist. Außerdem ist die Kopfstütze 14 höhenverstellbar an der Rückenlehne 6 angebracht.

Ähnlich wie bei üblichen Kraftfahrzeugsitzen bestehen das Lehnenunterteil 8 und der Lehnenkopf 12 jeweils aus einem Rahmengestell 22 bzw. 24 und einer Polsterung (nicht dargestellt), die auf ihrer Außenseite mit einem Lehnenbezug versehen sind.

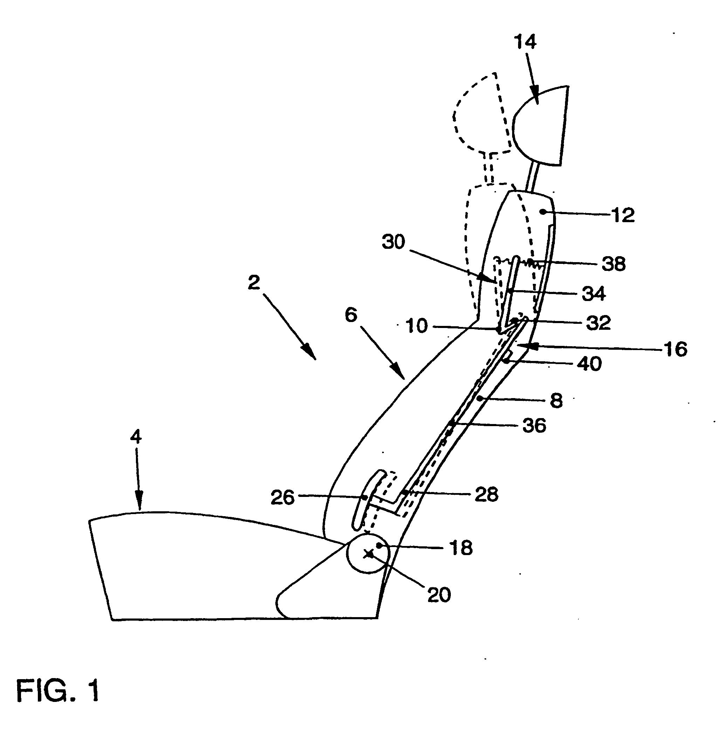

Bei dem in Fig. 1 dargestellten Ausführungsbeispiel mit einfacher Konstruktion, bei dem in der Normalstellung (in durchgezogenen Linien dargestellt) eine vorgegebene Neigung des Lehnenkopfs 12 in Bezug zum Lehnenunterteil 8 fest vorgegeben ist, besteht der Lehnenkopfverstellmechanismus 16 im wesentlichen aus einer im unteren Drittel des Lehnenunterteils 8 angeordneten und als Kraftaufnahmeelement dienenden Beckenstütze 26, einem die Beckenstütze 26 an seinem unteren Ende tragenden und im Lehnenunterteil 8 verschwenkbar gelagerten Kraftübertragungshebel 28, sowie einem abgeknickten zweiarmigen Schwenkhebel 30, dessen einer Hebelarm 32 oberhalb der Schwenkachse 10 des Lehnenkopfs 12 gelenkig mit dem oberen Ende des Kraftübertragungshebels 28 verbunden ist, während sein anderer Hebelarm 34 starr mit dem Rahmengestell 24 des Lehnenkopfs 12 verbunden ist.

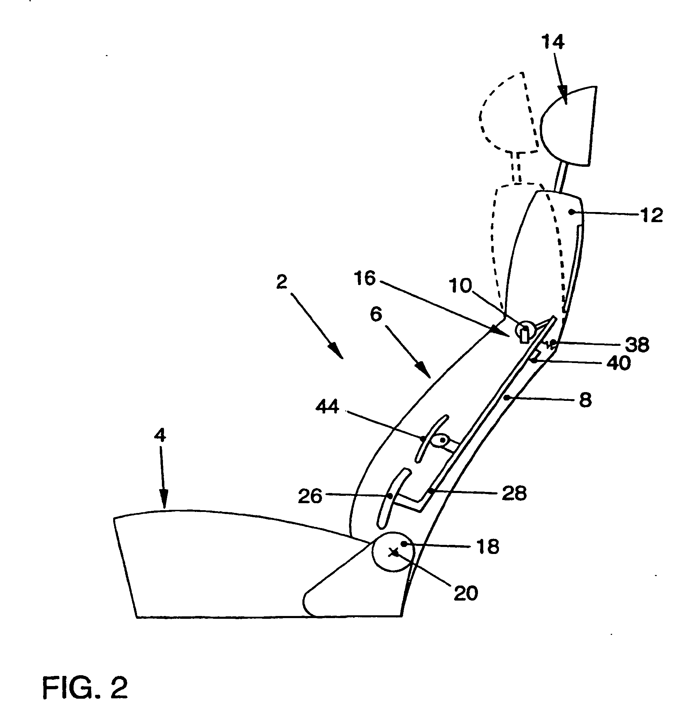

Der einstückig ausgebildete, um die Schwenkachse 10 des Lehnenkopfs 12 verschwenkbare Schwenkhebel 30 überträgt die Hebelkraft des Kraftübertragungshebels auf den Lehnenkopf 12 und ermöglicht außerdem durch Veränderung seiner Form und seiner Abmessungen sowie durch eine geeignete Wahl der Position einer Schwenkachse 36 des Kraftübertragungshebels 28 eine Anpassung des Schwenkwinkels des Lehnenkopfs 12 und damit der Verlagerung der Kopfstütze 14 auf einen gewünschten Wert. Eine auf den Schwenkhebel 30 einwirkende Feder 38 und ein im Lehnenunterteil 8 angeordneter Anschlag 40 halten die beiden Hebel 28, 30 und damit den Lehnenkopf 12 in der Normalstellung. Alternativ können die Feder 38 und der Anschlag 40 jedoch auch an einer anderen Stelle angeordnet sein (vgl. Fig. 2).

Die gepolsterte, in der vertikalen Schnittebene der Fig. 1 leicht konvex in Fahrtrichtung gekrümmte Beckenstütze 26 ist in einem gewissen Abstand hinter dem Bezug der Vorderseite des Lehnenunterteils 8 angeordnet, so daß sie im normalen Gebrauch von hinten her gegen das Becken eines auf dem Fahrzeugsitz 2 sitzenden Fahrzeuginsassen anliegt oder einen geringen Abstand von diesem aufweist, jedoch vom Becken des Fahrzeuginsassen nicht oder nur geringfügig nach hinten gedrückt wird, zum Beispiel wenn sich ein Fahrzeuginsasse in den Fahrzeugsitz 2 fallen läßt oder sich während der Fahrt gegen die Rückenlehne 6 stemmt.

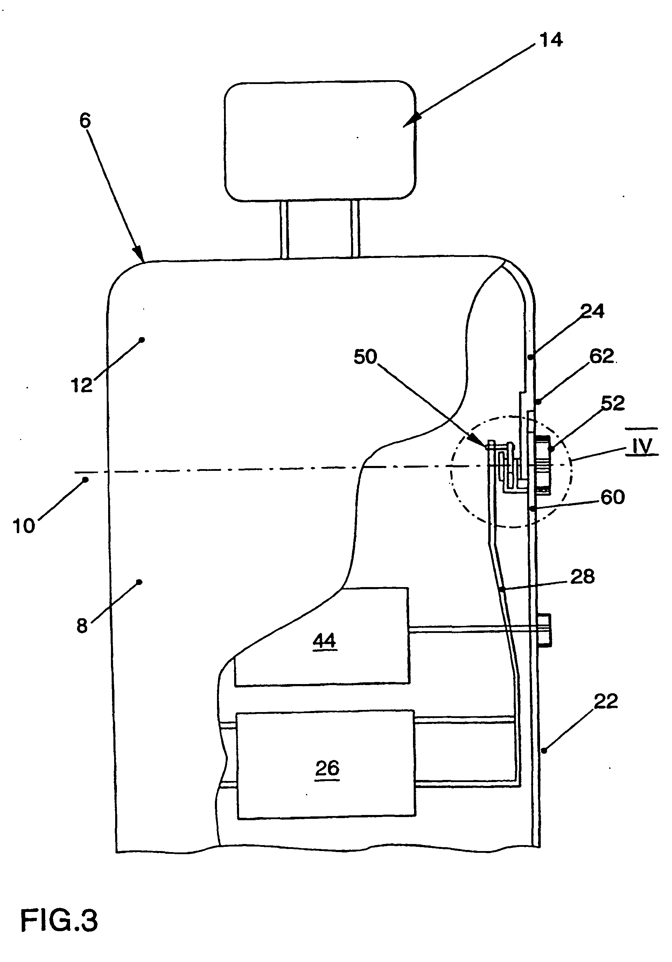

Der Kraftübertragungshebel 28 und der Schwenkhebel 30 können jeweils in Form eines einzigen, in Vorderseitenansicht durch die Mitte der Rückenlehne 6 verlaufenden Hebels ausgebildet sein. Jedoch werden beide Hebel 28, 30 jeweils bevorzugt von einem Hebelgestänge aus zwei parallelen Schenkeln gebildet, die jeweils in der Nähe einer Schmalseite der Rückenlehne 6 angeordnet sind (vgl. Fig. 3).

Bei einem Auffahrunfall, bei dem ein anderes Kraftfahrzeug auf das Heck des mit dem Fahrzeugsitz 2 ausgestatteten Kraftfahrzeugs prallt, wird ein auf dem Sitz 2 sitzender Fahrzeuginsasse infolge seiner Trägheit in Bezug zum Sitz 2 beschleunigt und gegen die Rückenlehne 6 gedrückt, wobei er mit seinem gegen die Beckenstütze 26 abgestützten Becken die letztere nach hinten drückt und den Kraftübertragungshebel 28 verschwenkt.

Dadurch wird der Schwenkhebel 30 und damit auch der Lehnenkopf 12 nach vorne in die in unterbrochenen Linien dargestellte Aufprallstellung verschwenkt, in der ein Abstand zwischen der Kopfstütze 14 und dem Kopf des Fahrzeuginsassen kleiner ist und somit der letztere im wesentlichen verzögerungsfrei und weich von der Kopfstütze 14 aufgefangen wird. Sobald der Druck des Beckens auf die Beckenstütze 26 endet, zum Beispiel wenn der Fahrzeuginsasse aussteigt, werden die Hebel 28, 30 und der Lehnenkopf 12 von der als Rückstellfeder wirkenden Feder 38 wieder nach hinten in die Normalstellung bewegt. Im Unterschied zu dem Fahrzeugsitz 2 in Fig. 1 weist der in den Figuren 2 bis 5 dargestellte Fahrzeugsitz 2 zusätzlich eine Lordosenstütze 44 auf, die oberhalb der Beckenstütze 28 auf dem Kraftübertragungshebel 28 angebracht ist. Wie die Lordosenstützen üblicher Kraftfahrzeugsitze stützt diese verstellbare Lordosenstütze 44 den Fahrzeuginsassen im Bereich der Lendenwirbel ab. Die gegen den Rücken des Fahrzeuginsassen anliegende Lordosenstütze 44 bildet hier ebenfalls einen Teil des Kraftaufnahmeelements.

Weiter läßt sich bei dem Kraftfahrzeugsitz 2 aus den Figuren 2 bis 5 die Neigung des Lehnenkopfs 12 in Bezug zum Lehnenunterteil 8 von Hand verstellen, zum Beispiel um bei umgelegter Rückenlehne 6 eine weitgehend ebene Ruhefläche zu erhalten oder um zu verhindern, daß die Kopfstütze 14 schräg nach hinten ragt, wenn die Neigung des Lehnenunterteils 8 verhältnismäßig flach eingestellt ist.

Dazu ist auf der Schwenkachse 10 zwischen dem Lehnenunterteil 8 und dem Lehnenkopf 12 ein Drehbeschlag 50 vorgesehen, der zur Betätigung ein an einer Schmalseite der Lehne 6 angeordnetes Verstellrad 52 aufweist.

Der Drehbeschlag 50 umfaßt ein Planetengetriebe (nicht sichtbar), das in einem durch das Verstellrad 52 verschlossenen Gehäuse 54 auf der Außenseite der Lehne 6 angeordnet ist. Ober das Sonnenrad des Planetengetriebes steht ein Drehzapfen 56 über, der eine zylindrische Durchtrittsöffnung 58 in einer Seitenwange 60 des Rahmengestells 22 des Lehnenunterteils 8 durchsetzt und drehfest mit einer Seitenwange 62 des Rahmengestells 24 des Lehnenkopfs 12 verbunden ist, so daß der Lehnenkopf 12 beim Drehen des Verstellrades 52 gegenüber dem Lehnenunterteil 8 verschwenkt wird.

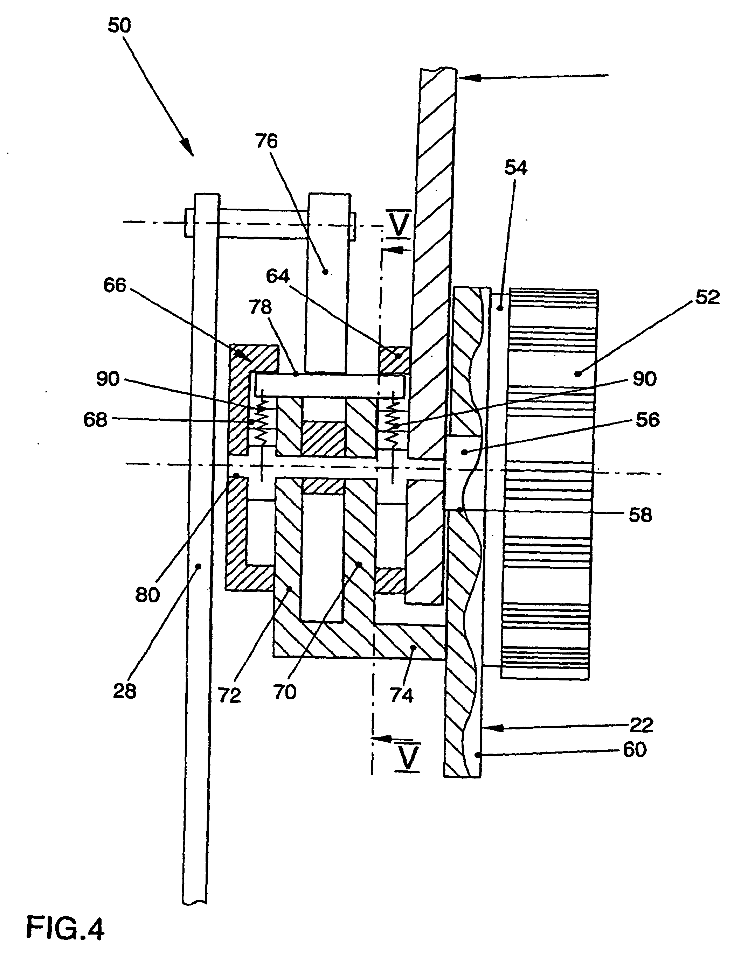

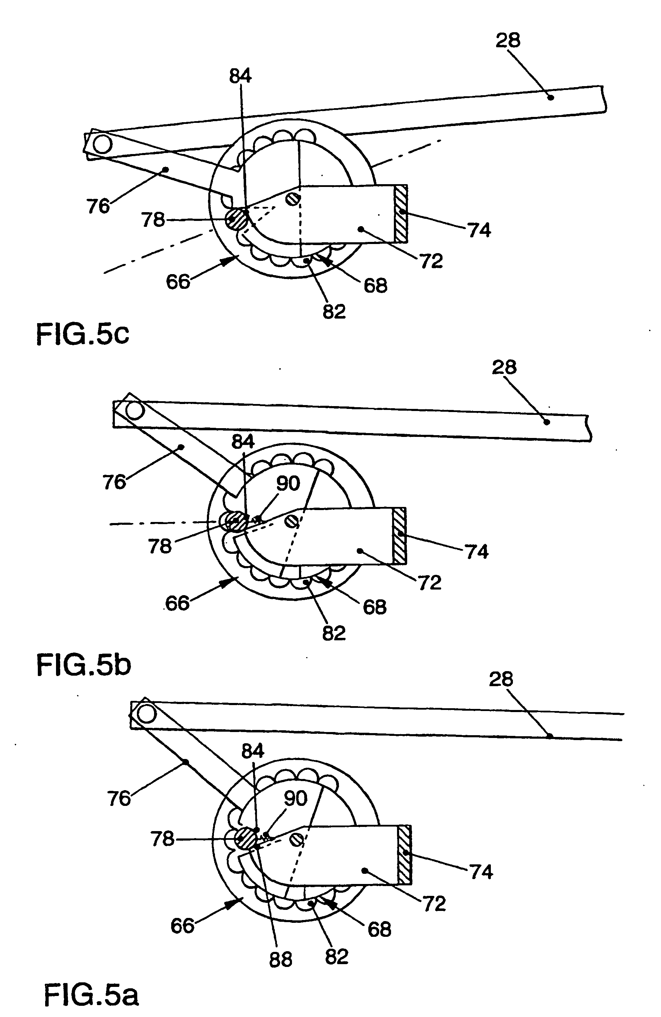

Wie am besten in den Figuren 4 und 5 dargestellt, umfaßt der Drehbeschlag 50 neben dem Verstellrad 52 zwei in einem axialen Abstand voneinander auf der Innenseite der Seitenwange 62 angeordnete und drehfest mit dieser verbundene, zur Schwenkachse 10 koaxiale Hohlräder 64, 66, die auf einem Teil ihres Umfangs mit einer Innenverzahnung 68 versehen sind. Weiter umfaßt der Drehbeschlag 50 zwei im Abstand voneinander in einen Zwischenraum zwischen den Hohlrädern 64, 66 eingreifende Kulissenscheiben 70, 72, die über einen an der Seitenwange 60 angeschweißten Ausleger 74 starr mit dem Lehnenunterteil 8 verbunden sind, einen Schwenkhebel 76, dessen eines Ende zwischen die Kulissenscheiben 70, 72 eingreift und drehbar auf der Schwenkachse 10 gelagert ist und dessen anderes Ende gelenkig mit dem oberen Ende des Kraftübertragungshebels 28 verbunden ist, sowie eine parallel zum Drehzapfen 56 ausgerichtete zylindrische Rolle 78, die beim Verschwenken des Schwenkhebels 76 an den Kulissenscheiben 70, 72 entlang zwischen jeweils zwei benachbarte Zähne der Innenverzahnungen 68 geschoben wird, um den Schwenkhebel 76 drehfest mit den Hohlrädern 64, 66 und damit mit dem Lehnenkopf 12 zu koppeln.

Von den beiden Hohlrädern 64, 66 ist das eine ringförmig ausgebildet und auf die Innenseite der Seitenwange 62 aufgeschweißt, während das andere schüsselförmig ausgebildet ist und drehfest auf dem Ende des Drehzapfens 56 befestigt ist, der in eine Paßöffnung 80 im Boden des Hohlrads 66 eingesetzt ist. Die deckungsgleichen Innenverzahnungen 68 der Hohlräder 64, 66 weisen jeweils zwischen zwei benachbarten Zähnen halbzylindrische Lücken 82 auf, deren Durchmesser an den Durchmesser der Rolle 78 angepaßt sind, so daß diese die Hohlräder 64, 66 mitbewegt, wenn sie in eine Lücke 82 eingreift und in dieser Lage vom Schwenkhebel 76 verschoben wird.

Das zwischen die Kulissenscheiben 70, 72 eingreifende halbzylindrische Ende des Schwenkhebels 76 weist eine im Querschnitt keilförmige Ausnehmung 84 in seiner zylindrischen Umfangsfläche auf. Der Durchmesser des Halbkreises ist geringfügig kleiner als der Durchmesser der Hohlräder 64, 66 an den Spitzen der Innenverzahnung 68. In der Normalstellung (Fig. 5a) nimmt die keilförmige Ausnehmung 84 die Rolle 78 vollständig auf, so daß sie nicht nach außen über die zylindrische Umfangsfläche des Schwenkhebels 76 übersteht und beim Verstellen der Lehnenkopfneigung eine ungehinderte Bewegung der Hohlräder 64, 66 ermöglicht.

Die beiden Kulissenscheiben 70, 72 und der Schwenkhebel 76 sind so aneinander angepaßt, daß sie in der Normalstellung einen im Querschnitt keilförmigen und nach oben offenen Spalt 88 begrenzen (Fig. 5a), der im wesentlichen mit der keilförmigen Aussparung 84 fluchtet, wobei er an einer Seite von einer Schräge der Kulissenscheiben 70, 72 und an der anderen Seite von einer Schräge des Schwenkhebels 76 begrenzt wird. Die Rolle 78 wird von zwei Zugfedern 90 in diesem Spalt 88 festgehalten, so daß sich die Hohlräder 64, 66 bei einer manuellen Verstellung der Lehnenkopfneigung in Bezug zu den Kulissenscheiben 70, 72 und zum Schwenkhebel 76 verdrehen können, ohne die Rolle 78 zu berühren. Die beiden Zugfedern 90 sind mit ihrem unteren Ende drehbar auf dem Drehzapfen 56 und mit ihrem oberen Ende in einer Befestigungsbohrung der Rolle 78 eingehängt. Die beiden Kulissenscheiben 70, 72 weisen weiter eine zur Schwenkachse 10 koaxiale gerundete Oberseite auf, deren Abstand von den Spitzen der Innenverzahnung 68 gleich oder größer als der Durchmesser der Rolle 78 ist.

Wenn bei einem Heckaufprall die Beckenstütze 26 vom Becken eines Fahrzeuginsassen nach hinten gedrückt wird und dadurch den Kraftübertragungshebel 28 um die Schwenkachse verschwenkt, verdreht dessen oberes Ende den Schwenkhebel (in Fig. 6 entgegen dem Uhrzeigersinn) um die Schwenkachse 10, wobei sich die gegenüberliegenden Schrägen des Schwenkhebels 76 und der Kulissenscheiben 70, 72 einander nähem. Dadurch schließt sich keilförmige Spalt 88, und die Rolle 78 wird entgegen der Kraft der Federn 90 nach oben in die gerade oberhalb des Spaltes 88 befindliche Lücke 82 zwischen zwei benachbarten Zähnen der Innenverzahnungen 68 gedrückt (Fig. 5b). Dadurch werden die Hohlräder 64, 66 und damit der Lehnenkopf 12 drehfest mit dem Schwenkhebel 76 gekoppelt, so daß sie bei einer weiteren Schwenkbewegung des Kraftübertragungshebels 28 zusammen mit dem Schwenkhebel 76 verdreht werden. Dabei bewegt sich die Rolle 78 über die Oberseite der Kulissenscheiben 70, 72 (Fig. 5c), die einen Austritt der Rolle 78 aus der Lücke 82 verhindern.

Wenn die Beckenstütze 26 nach einem Heckaufprall entlastet wird, zieht die Rückstellfeder 38 den Kraftübertragungshebel 28 wieder in die Normalstellung zurück. Dadurch werden auch der Schwenkhebel 76 und mit diesem die Rolle 78, die Hohlräder 64, 66 und mit diesen auch der Lehnenkopf wieder in ihre Normalstellung zurückgeschwenkt und die Rolle 78 von den Federn 90 wieder in die Aussparung 84 gezogen.

## Patentansprüche

1. Sitz für einen Insassen eines Kraftfahrzeugs, mit einem Sitzteil (4), einer Rückenlehne (6) und einer Kopfstütze 14), bei dem die Rückenlehne (6) einen mit dem Sitzteil (4) verbundenen ersten, unteren Lehnenteil (8) und einen die Kopfstütze (14) tragenden, in Bezug zum ersten Lehnenteil (8) verschwenkbaren zweiten, oberen Lehnenteil (12) aufweist, wobei bei einem Heckaufprall mindestens ein Teil der vom Fahrzeuginsassen auf den ersten unteren Lehnenteil (8) ausgeübten Kräfte mittels eines Kraftübertragungselementes auf den zweiten oberen Lehnenteil (12) übertragen werden, um diesen zusammen mit der Kopfstütze (14) in Bezug zum ersten Lehnenteil (8) nach vorne zu verschwenken und dadurch die Kopfstütze (14) näher an den Kopf des Fahrzeuginsassen heranzubewegen, **dadurch gekennzeichnet, dass** vom Fahrzeuginsassen im Bereich seines Beckens auf den unteren Lehnenteit (8) ausgeübte Kräfte übertragen werden.

2. Sitz nach Anspruch 1, **dadurch gekennzeichnet, dass** das Kraftaufnahmeelement in der unteren Hälfte des unteren Lehnenteits (8) angeordnet ist.

3. Sitz nach Anspruch 1 oder 2, **dadurch gekennzeichnet, dass** das Kraftaufnahmeelement eine im Inneren des unteren Lehnenteils (8) angeordnete Beckenstütze (26) umfasst.

4. Sitz nach einem der Ansprüche 1 bis 3, **dadurch gekennzeichnet, dass** das Kraftaufnahmeelement (26) zumindest beim Heckaufprall über eine Kraftübertragungseinrichtung (28, 30) mit dem oberen Lehnenteil (12) gekoppelt ist.

5. Sitz nach einem der Ansprüche 1 bis 4, **dadurch gekennzeichnet, dass** das Kraftaufnahmeelement (26) mit einem unteren Ende eines Kraftübertragungshebels (28) der Kraftübertragungseinrichtung (28, 30) verbunden ist.

6. Sitz nach Anspruch 5, **dadurch gekennzeichnet, dass** oberhalb des Kraftaufnahmeelements (26) eine Lordosenstütze (44) auf dem Kraftübertragungshebel (28) angebracht ist.

7. Sitz nach einem der Ansprüche 4 bis 6, **dadurch gekennzeichnet, dass** die Kraftübertragungseinrichtung (28, 30) ein Element (30, 76) umfasst, das den Schwenkwinkel des oberen Lehnenteils (12) in Bezug zum unteren Lehnenteil (8) gegenüber dem Schwenkwinkel des Kraftübertragungshebels (28) vergrößert.

8. Sitz nach Anspruch 7, **dadurch gekennzeichnet, dass** das Element ein weiterer, auf einer Schwenkachse (10) zwischen dem unteren und dem oberen Lehnenteil (8, 12) gelagerter Schwenkhebel (30, 76) ist, der gelenkig mit dem oberen Ende des Kraftübertragungshebels (28) verbunden ist.

9. Sitz nach Anspruch 8, **dadurch gekennzeichnet, dass** der Schwenkhebel oberhalb der Schwenkachse (10) gelenkig mit dem Kraftübertragungshebel (28) verbunden ist.

10. Sitz nach einem der Ansprüche 1 bis 9, **dadurch gekennzeichnet, dass** die Neigung des oberen Lehnenteils (12) in Bezug zum unteren Lehnenteil (8) verstellbar ist.

11. Sitz nach Anspruch 10, **dadurch gekennzeichnet, dass** zwischen dem unteren und dem oberen Lehnenteil (8, 12) ein Drehbeschlag (50) angeordnet ist.

12. Sitz nach Anspruch 11, **dadurch gekennzeichnet, dass** der Drehbeschlag (50) ein Verstellrad (52) zum Verstellen der Neigung des oberen Lehnertteils (12) und der Kopfstütze (14) in Bezug zum unteren Lehnenteil (8) aufweist.

13. Sitz nach Anspruch 11 oder 12, **dadurch gekennzeichnet, dass** der Drehbeschlag (50) mindestens ein drehfest mit dem oberen Lehnenteil (12) verbundenes Beschlagelement (64, 66) umfasst, das bei einer Schwenkbewegung des Kraftübertragungshebels (28) oder eines von diesem verschwenkten Schwenkhebels (30) drehfest mit dem Hebel (28, 30) gekoppelt wird.

14. Sitz nach Anspruch 13, **dadurch gekennzeichnet, dass** das Beschlagelement (64, 66) mit dem Hebel (28, 30) über ein Mitnehmerelement (78) gekoppelt wird, das beim Verschwenken des Hebels (28, 30) mit dem Beschlagelement (64, 66) in Dreheingriff gebracht wird.

15. Sitz nach Anspruch 14, **dadurch gekennzeichnet, dass** sich das Mitnehmerelement (78) an einer Kulisse mindestens eines Kulissenelements (70, 72) entlangbewegt, das in Bezug zum unteren Lehnenteil (8) ortsfest ist.

## Claims

1. Seat for a passenger of a motor vehicle, having a seat part (4), a backrest (6) and a head restraint (14), in which the backrest (6) has a first, lower backrest part (8) connected to the seat part (4) and a second, upper backrest part (12) which supports the head restraint (14) and can be pivoted with respect to the first backrest part (8), with at least some of the forces exerted by the vehicle passenger on the first, lower backrest part (8) in the event of a rear impact being transmitted by means of a force transmission element to the second, upper backrest part (12), in order to pivot the latter together with the head restraint (14) forwards with respect to the first backrest part (8) and, as a result, to move the head restraint (14) closer to the vehicle passenger's head, **characterized in that** forces exerted by the vehicle passenger in the region of his pelvis are transmitted to the lower backrest part (8).

2. Seat according to Claim 1, **characterized in that** the force-absorbing element is arranged in the lower half of the lower backrest part (8).

3. Seat according to Claim 1 or 2, **characterized in that** the force-absorbing element comprises a pelvis support (26) arranged in the interior of the lower backrest part (8).

4. Seat according to one of Claims 1 to 3, **characterized in that** the force-absorbing element (26) is coupled via a force transmission device (28, 30) to the upper backrest part (12) at least during the rear impact.

5. Seat according to one of Claims 1 to 4, **characterized in that** the force-absorbing element (26) is connected to a lower end of a force transmission lever (28) of the force transmission device (28, 30).

6. Seat according to Claim 5, **characterized in that** a lordosis support (44) is fitted on the force transmission lever (28) above the force-absorbing element (26).

7. Seat according to one of Claims 4 to 6, **characterized in that** the force transmission device (28, 30) comprises an element (30, 76) which enlarges the pivot angle of the upper backrest part (12) with respect to the lower backrest part (8) in relation to the pivot angle of the force transmission lever (28).

8. Seat according to Claim 7, **characterized in that** the element is a further pivot lever (30, 76) which is mounted on a pivot spindle (10) between the lower and the upper backrest part (8, 12) and is connected in an articulated manner to the upper end of the force transmission lever (28).

9. Seat according to Claim 8, **characterized in that** the pivot lever is connected above the pivot spindle (10) in an articulated manner to the force transmission lever (28).

10. Seat according to one of Claims 1 to 9, **characterized in that** the inclination of the upper backrest part (12) with respect to the lower backrest part (8) can be adjusted.

11. Seat according to Claim 10, **characterized in that** a rotary fitting (50) is arranged between the lower and the upper backrest part (8, 12).

12. Seat according to Claim 11, **characterized in that** the rotary fitting (50) has an adjusting wheel (52) for adjusting the inclination of the upper backrest part (12) and the head restraint (14) with respect to the lower backrest part (8).

13. Seat according to Claim 11 or 12, **characterized in that** the rotary fitting (50) comprises at least one fitting element (64, 66) which is connected in a rotationally fixed manner to the upper backrest part (12) and, during a pivoting movement of the force transmission lever (28) or of a pivot lever (30) pivoted by the latter, is coupled to the lever (28, 30) in a rotationally fixed manner.

14. Seat according to Claim 13, **characterized in that** the fitting element (64, 66) is coupled to the lever (28, 30) via a driver element (78) which is brought into rotational engagement with the fitting element (64, 66) when the lever (28, 30) is pivoted.

15. Seat according to Claim 14, **characterized in that** the driver element (78) moves along a slotted guide of at least one slotted-guide element (70, 72) which is fixed in position with respect to the lower backrest part (8).

## Revendications

1. Siège pour un occupant d'un véhicule automobile, comprenant une partie de siège (4), un dossier de siège (6) et un appuie-tête (14), dans lequel le dossier (6) présente une première partie de dossier inférieure (8) connectée à la partie de siège (4) et une deuxième partie de dossier supérieure (12) portant l'appuie-tête (14), pouvant pivoter par rapport à la première partie de dossier (8), au moins une partie des forces exercées par l'occupant du véhicule sur la première partie de dossier inférieure (8) étant transmise dans le cas d'une collision arrière au moyen d'un élément de transfert de forces à la deuxième partie de dossier supérieure (12), afin de faire pivoter cette dernière vers l'avant conjointement avec l'appuie-tête (14) par rapport à la première partie de dossier (8) et de ce fait de rapprocher l'appuie-tête (14) plus près de la tête de l'occupant du véhicule, **caractérisé en ce que** des forces exercées par l'occupant du véhicule dans la région de son bassin sur la partie de dossier inférieure (8) sont transmises.

2. Siège selon la revendication 1, **caractérisé en ce que** l'élément de réception de force est disposé dans la moitié inférieure de la partie de dossier inférieure (8).

3. Siège selon la revendication 1 ou 2, **caractérisé en ce que** l'élément de réception de force comprend un support de bassin (26) disposé à l'intérieur de la partie de dossier inférieure (8).

4. Siège selon l'une quelconque des revendications 1 à 3, **caractérisé en ce que** l'élément de réception de force (26) est accouplé à la partie de dossier supérieure (12) par le biais d'un dispositif de transfert de force (28, 30) au moins dans le cas d'une collision arrière.

5. Siège selon l'une quelconque des revendications 1 à 4, **caractérisé en ce que** l'élément de réception de force (26) est connecté à une extrémité inférieure d'un levier de transfert de force (28) du dispositif de transfert de force (28, 30).

6. Siège selon la revendication 5, **caractérisé en ce qu'**un support lombaire (44) est monté sur le levier de transfert de force (28) au-dessus de l'élément de réception de force (26).

7. Siège selon l'une quelconque des revendications 4 à 6, **caractérisé en ce que** le dispositif de transfert de force (28, 30) comprend un élément (30, 76) qui augmente l'angle de pivotement de la partie de dossier supérieure (12) par rapport à la partie de dossier inférieure (8) par rapport à l'angle de pivotement du levier de transfert de force (28).

8. Siège selon la revendication 7, **caractérisé en ce que** l'élément est un levier de pivotement supplémentaire (30, 76) monté sur un axe de pivotement (10) entre la partie de dossier inférieure et la partie de dossier supérieure (8, 12), qui est connecté de manière articulée à l'extrémité supérieure du levier de transfert de force (28).

9. Siège selon la revendication 8, **caractérisé en ce que** le levier pivotant est connecté au-dessus de l'axe de pivotement (10) de manière articulée au levier de transfert de force (28).

10. Siège selon l'une quelconque des revendications 1 à 9, **caractérisé en ce que** l'inclinaison de la partie de dossier supérieure (12) par rapport à la partie de dossier inférieure (8) est réglable.

11. Siège selon la revendication 10, **caractérisé en ce qu'**entre la partie de dossier inférieure et la partie de dossier supérieure (8, 12) est disposée une ferrure rotative (50).

12. Siège selon la revendication 11, **caractérisé en ce que** la ferrure rotative (50) présente une molette de réglage (52) pour régler l'inclinaison de la partie de dossier supérieure (12) et de l'appuie-tête (14) par rapport à la partie de dossier inférieure (8).

13. Siège selon la revendication 11 ou 12, **caractérisé en ce que** la ferrure rotative (50) comprend au moins un élément de ferrure (64, 66) connecté fixement en rotation à la partie de dossier supérieure (12), qui, dans le cas d'un mouvement de pivotement du levier de transfert de force (28) ou d'un levier pivotant (30) pivoté par celui-ci, est accouplé fixement en rotation au levier (28, 30).

14. Siège selon la revendication 13, **caractérisé en ce que** l'élément de ferrure (64, 66) est accouplé au levier (28, 30) par le biais d'un élément d'entraînement (78), qui, dans le cas du pivotement du levier (28, 30) est amené en engagement rotatif avec l'élément de ferrure (64, 66).

15. Siège selon la revendication 14, **caractérisé en ce que** l'élément d'entraînement (78) est déplacé le long d'une coulisse d'au moins un élément de coulisse (70, 72), qui est fixe par rapport à la partie de dossier inférieure (8).
